# FASCICULE DE BREVET EUROPEEN

(11) **EP 3 075 685 B1**
(45) Date de publication et mention de la délivrance du brevet: **05.06.2019**
(21) Numéro de dépôt: 16163587.5
(22) Date de dépôt: 01.04.2016
(51) Int. Cl.: B65G 37/02, B65B 65/00

(54) **DISPOSITIF DE CONVOYAGE PAR CHARIOT AUTONOME**
BEFÖRDERUNGSVORRICHTUNG MITHILFE EINES AUTONOMEN WAGENS
DEVICE FOR CONVEYANCE BY SELF-CONTAINED CARRIAGE

(30) Priorité: 02.04.2015 FR 1552867
(43) Date de publication de la demande: 05.10.2016
(73) Titulaire: Gebo Packaging Solutions France, 67116 Reichstett (FR)
(72) Inventeur: HUTTER, Patrick, 67116 Reichstett (FR); WAELDIN, Jean-Claude, 67116 Reichstett (FR)
(74) Mandataire: Sidel Group

(56) Documents cités:
- EP-A2- 1 988 038
- WO-A1-2013/083144
- FR-A1- 2 998 282
- US-A- 4 669 047
- US-A- 4 993 507
- US-A- 5 321 885
- US-A1- 2012 216 384
- US-A1- 2014 365 258

## Description

La présente invention relève du domaine des équipements pour le convoyage au sein d'une ligne industrielle de traitement de produits, et a pour objet une ligne de traitement de produits à la chaîne, une utilisation particulière d'un chariot ainsi qu'un procédé de traitement industriel de produits.

Dans le domaine de l'invention, une ligne de traitement de produits comprend généralement un ensemble de postes successifs, qui transforment le produit jusqu'à l'obtention finale d'une palette comprenant une superposition de couches comprenant chacune des produits, parfois regroupés en pack, caisses, fardeaux, ou autres. En aval de la ligne, la palette pleine est ensuite traitée pour une expédition, en passant éventuellement dans une centrale de gestion logistique, notamment du type magasin automatique. Les lignes de traitement de produits concernées par l'invention réalisent donc au moins une fonction de conditionnement secondaire grâce à laquelle les produits à l'unité sont préparés pour l'expédition en masse. La ligne peut aussi avoir des fonctions en amont, comme la préparation, réalisation, fabrication, stockage, du produit lui-même, en amont d'un tel conditionnement secondaire à des fins d'expédition.

Une grande quantité de produits successifs identiques est donc traitée de façon similaire au sein des postes successifs de la ligne. La ligne assure donc globalement en continu le même traitement aux produits successifs, et ce à une cadence globale qui définit le rendement de la ligne.

Ce genre de ligne est donc nécessairement muni de moyens de déplacement des produits entre les postes. Classiquement, il s'agit de convoyeurs mécaniques du type à bande sans fin, capables de tourner en continu et sur lesquels reposent les produits par leur partie inférieure pour être entraînés par lui entre ses deux extrémités. Des solutions d'accumulation adaptées permettent aussi de faire un tampon entre les postes successifs.

Une solution de convoyage pour ligne de traitement avec une accumulation entre deux postes de traitement de produits à l'unité est par exemple proposée dans EP1497208 et repose sur la succession d'un module transformant un flux unifilaire en flux multifilaire, d'un module d'accumulation d'un tel flux multifilaire, puis d'un module de transformation du flux multifilaire en flux unifilaire.

Une autre solution de déplacement entre deux postes de traitement à l'unité est proposée dans FR2998282, ce document divulgue une ligne de traitement de produits selon le préambule de la revendication 1, et repose essentiellement sur un convoyage mécanique à tapis sans fin, une solution de transfert vers une table fixe d'accumulation, pour une solution de transfert depuis ladite table vers un autre convoyeur mécanique à bande sans fin.

D'autres équipements de déplacement à base de convoyeurs mécanique fixes sont aussi proposés, par exemple, dans EP2188199, ou encore dans US6206174.

On constate néanmoins une évolution de l'utilisation de telles lignes de conditionnement pour des quantités de produits identiques de plus en plus faibles. Les formats de produits traités sont donc amenés à changer de plus en plus fréquemment et les changements et reconfigurations nécessaires de la ligne sont alors eux aussi de plus en plus fréquents. En outre, le changement de format peut non seulement requérir un nouveau réglage des postes de la ligne, mais aussi la substitution de certains postes de la ligne à d'autres, compatibles avec le nouveau produit traité. Cette reconfiguration de la ligne au niveau des équipements qui la constituent est aussi amenée par l'évolution normale de la ligne, pour y rajouter de nouvelles machines, remplacer certaines autres, etc.

Il est donc de plus en plus important de pouvoir disposer d'une ligne de conditionnement, en amont de l'installation logistique de traitement de palettes pleines, qui soit la plus flexible possible, capable de s'adapter très rapidement à des nouveaux formats de produits et qu'il est aussi très facile de faire évoluer vers de nouvelles configurations.

A cet effet, l'invention propose de substituer les convoyeurs mécaniques fixes par des chariots mobiles autonomes à itinéraire libre, qui remplissent alors cette fonction de déplacer les produits entre les machines au sein de la ligne. Les machines, ou postes de traitement, peuvent donc être fixes et positionnées à différents endroits dans l'atelier, voire repositionnées, voire ajoutés, voire supprimés, sans avoir à reconsidérer la conception des solutions de convoyage mécaniques fixes. Rajouter un poste de traitement dans la ligne nécessite alors éventuellement uniquement une prise en compte dans la programmation des chariots.

L'invention a ainsi pour objet une ligne de traitement de produits selon la revendication 1.

L'invention a aussi pour objet une utilisation de chariots mobiles autoportés autonomes en tant que moyen de déplacement dans une ligne de traitement de produits à la chaîne, selon la revendication 8.

L'invention a enfin pour objet un procédé mis en oeuvre par une telle ligne, à savoir un procédé de traitement de produits au sein d'une ligne de traitement de produits selon la revendication 9.

L'invention sera mieux comprise grâce à la description ci-dessous, qui se base sur des modes de réalisations possibles, expliqués de façon illustrative et nullement limitative, en référence avec les figures annexées suivantes:
- la figure 1 schématise un poste de traitement de produits à l'unité, avec un chariot accosté et un chariot en approche du côté opposé
- la figure 2 montre une ligne selon l'invention, en amont d'une centrale logistique d'expédition, et
- la figure 3 schématise des possibilités de sortie d'un poste de traitement dans trois configurations : 3a, 3b et 3c.

L'invention a ainsi tout d'abord pour objet une ligne 1 de traitement de produits 2 à la chaîne, comprenant, d'une part, une pluralité de postes 3 de traitement successif desdits produits 2, et, d'autre part, d'un moyen de déplacement 4, pour déplacer les produits 2 entre les postes 3 au sein de cette ligne 1, en particulier, depuis un poste 3 amont dans lesquels ils viennent d'être traités vers un poste 3 aval dans lesquels ils doivent ensuite être traités.

Les produits 2 sont du type conteneur de liquide ou d'aliment, à l'unité ou en groupe (pack, fardeau, caisse, carton, etc...).

La ligne 1 de traitement concernée par le recours à ce type de moyen de déplacement peut être l'installation complète qui assure le traitement complet depuis la fabrication du produit 2 jusqu'à son organisation en palette prête pour son suivi ultérieur dans un centre de tri logistique ou son expédition, ou seulement une partie d'une telle installation, notamment par exemple un ilot de postes 3 au sein d'une telle installation complète de préparation à l'expédition. Les débits attendus au sein d'une telle ligne 1 traitant les produits 2 à l'unité sont significativement plus élevés que celles, en amont ou en aval, traitant des palettes, sur lesquels le nombre de produits 2 est significativement différent.

Les postes 3 de traitement assurent en particulier la transformation des produits 2 à l'unité, tel que le remplissage, l'étiquetage, ou encore de plusieurs produits 2 du type conteneur simultanément pour les regrouper en pack, de plusieurs produits 2 du type caisse pour les organiser en couche sur une palette, etc. Les postes 3 successifs peuvent ainsi réaliser une fabrication, une transformation, un stockage et/ou encore en changement d'organisation géométrique des produits 2. Bien entendu, la ligne 1 a des postes 3 qui reçoivent leurs produits 2 de l'extérieur, en tant que matière première pour la ligne 1, ainsi que des postes 3 qui fournissent à l'extérieur les produits 2 en fin de traitement par la ligne 1. La ligne 1 participe donc à la préparation en amont d'untiés pour l'expédition logistique, généralement à base de palette, et non à la gestion, répartition et distribution de ces unités.

La ligne 1 est aménagée dans un atelier ou hall adapté, et les postes 3 reposent préférablement au sol. Le moyen de déplacement 4 classiquement utilisé dans l'état de l'art est à base de convoyeurs à bande sans fin mobile, montés sur une structure fixe posée au sol dans l'atelier. Les opérateurs de ligne 1 évoluent dans cet atelier et il alors nécessaire de prévoir notamment des passerelles pour contourner de tels moyens de déplacement 4. Les postes 3 sont difficilement mobiles et généralement ancrés au sol.

Selon l'invention, le moyen de déplacement 4 consiste essentiellement en au moins un chariot 5 mobile autoporté autonome évoluant au sol et qui transporte les produits 2 au cours de leur déplacement au sein de la ligne 1, préférablement une flotte de tels chariots 5 qui peuvent naviguer entre les postes 3 de la ligne 1. Il n'est pas nécessaire que les chariots 5 rejoignent des équipements ou autres machines qui sont hors de la ligne 1, mais ils peuvent être dédiés aux postes 3 de la ligne 1. Les chariots 5 mettent donc en relation les différents postes 3 de la ligne 1 et assurent la circulation du flux de produits 2 au sein de la ligne 1.

Le recours à des chariots 5 assure ainsi un maximum de flexibilité en fonction du nombre de produits 2 à traiter avec le format défini, mais aussi en fonction des postes 3 intervenant dans la réalisation du format défini, etc.

On comprendra que ces chariots 5 forment des véhicules ou navettes autonomes, capables de déplacer plusieurs produits 2 à la fois entre deux postes 3 successifs. Le déplacement de ces chariots 5 crée donc le déplacement des produits 2 entre les postes 3. Les chariots 5 se déplacent donc lors de la production par la ligne 1.

Selon une caractéristique additionnelle possible, le au moins un chariot 5 mobile est muni d'un entraînement embarqué, de sorte que ledit chariot 5 peut générer lui-même son propre mouvement, en particulier sous forme d'une motorisation, d'une transmission et d'un jeu de roues. Ledit chariot 5 mobile est ainsi autoguidé et donc d'itinéraire libre entre les postes 3, indépendamment d'une structure de guidage mécanique du type rails ou électromagnétique du type repère métallique au sol, etc., de sorte à atteindre un maximum de flexibilité dans les trajets à suivre en fonction des éléments, éventuellement mobiles, de l'environnement qu'il lui faut éviter, comme des opérateurs voire d'autres chariot 5.

Le chariot 5 mobile présente, d'une part, une surface d'accueil 8 de produits 2 sur laquelle les produits 2 peuvent reposer par leur partie inférieure, et, d'autre part, un châssis sur lequel est monté au moins l'entraînement embarqué ainsi que ladite surface d'accueil 8. La surface d'accueil 8 est préférablement horizontale et peut arriver à la hauteur de la sortie du poste 3 amont et/ou à la hauteur de l'entrée du poste 3 en aval. Le chariot 5 peut être muni de plusieurs surfaces d'accueil 8 superposées.

Pour son interaction avec les postes 3, le chariot 5 mobile peut aussi notamment comprendre des moyens d'accostage assurant l'interface mécanique et le bon positionnement avec le poste 3 où il reçoit les produits 2 et/ou le poste 3 où il livre les produits 2. Ces moyens d'accostage peuvent être notamment des moyens mécaniques de positionnement référencé, par exemple par des parties complémentaires comme des cônes.

De façon générale, il peut être envisagé que l'interaction avec un poste 3, en amont ou en aval, se fasse avec plusieurs chariots 5 simultanément. Ainsi, par exemple, plusieurs chariots 5 peuvent s'agglomérer pour former une seule et même unité, qui viendra recevoir les produits 2 à un poste 3 ou qui viendra délivrer les produits 2 à un poste 3. Lors de cette étape de transfert depuis ou vers un poste 3, les chariots 5 sont alors retenus les uns aux autres, pour former un élément solide, notamment grâce à des solutions de fixation mutuelle amovible. Une fois chargés ou déchargés, totalement ou uniquement partiellement, les chariots 5 peuvent se séparer pour se déplacer chacun de façon autonome, éventuellement vers des postes 3 différents. Alternativement, les chariots 5 peuvent rester ensemble et continuer à former un ensemble compact et solidaire, même au cours de leur déplacement dans l'atelier de production.

De façon générale, les chariots 5 forment donc des modules qui peuvent s'assembler mécaniquement pour former un ensemble monolithique de plus grande capacité de stockage en termes de produits 2. Dans une configuration où les chariots 5 sont regroupés, ils sont donc fixés les uns aux autres, et le groupe qu'ils forment se déplace de façon autonome et définit sa propre trajectoire. Pour assurer la cohérence, un des chariots 5 peut par exemple devenir maître et les autres esclaves. Le groupe de chariots 5 forme un train de chariots 5.

L'état aggloméré ou éclaté des chariots 5 peut changer ou être conservé entre les différentes étapes principales :
- chargement à la sortie d'un poste 3 : sous forme de chariots 5 agglomérés les uns aux autres, qui ne se déplace préférablement qu'une fois toute la surface occupée, ou sous forme de chariots 5 alimentés les uns après les autres, chaque chariot 5 rempli se dégageant du poste 3 ;
- déchargement à l'entrée d'un poste 3 : sous forme de chariots 5 agglomérés les uns aux autres, qui ne se déplace préférablement qu'une fois toute la surface vidée, ou sous forme de chariots 5 alimentés les uns après les autres, chaque chariot 5 vidé se dégageant du poste 3 ;
- déplacement dans la ligne 1 entre les postes 3 pour déplacer les produits 2 : déplacement de chaque chariot 5 l'un après l'autre, mobile l'un après l'autre et indépendants, ou déplacement en un bloc formés de plusieurs chariots 5 reliés les uns derrière les autres.

Le chariot 5 comprend aussi éventuellement une réserve d'énergie pour le fonctionnement de l'entraînement embarqué, en particulier électrique, au moins un poste 3 étant alors pourvu de moyen de fourniture d'énergie électrique pour recharger le chariot 5 lorsqu'il est accosté audit poste 3. On comprend que même dans le cas où plusieurs chariots 5 sont groupés en un assemblage, chacun d'eux reste autonome en ce que sens qu'il n'a pas besoin des autres chariots 5 pour se déplacer en cas de séparation. Le regroupement de plusieurs chariots 5, éventuellement temporaire, forme donc à nouveau un chariot 5 de plus grande capacité, autrement dit un chariot 5 peut, le cas échéant, être considéré comme constitué de plusieurs autres chariots 5 plus petits.

Selon une autre caractéristique additionnelle possible, le au moins un chariot 5 est apte à définir lui-même son itinéraire entre son poste 3 de départ et son poste 3 d'arrivée, en tenant compte, en particulier, du temps imparti pour le trajet, des obstacles à éviter, etc.

Ledit chariot 5 peut notamment être muni d'un système de géolocalisation physique, grâce auquel il connait instantanément sa propre position dans l'espace, ainsi qu'éventuellement aussi de moyens de détection d'obstacle, notamment optiques, voire aussi une unité de calcul embarquée qui définit l'itinéraire dudit chariot 5 compte tenu du poste 3 de départ et du poste 3 d'arrivée. Il est ainsi possible au chariot 5 de s'adapter à son environnement, qui peut changer d'un cycle à l'autre, voire même pendant le cycle dans le cas d'éléments mobiles. Le chariot 5 a donc un fonctionnement cyclique où il récupère des produits 2 à un poste 3 et les délivre à un autre poste 3.

La ligne 1 comprend notamment une centrale de contrôle 7 assurant la coordination du déplacement des chariots 5 entre les postes 2, au moins en contrôlant les postes 3 de départ et d'arrivée de chaque chariot 5, entre lesquels ledit chariot 5 peut définir librement son itinéraire, voire aussi en définissant au moins partiellement certains éléments de leur parcours.

Selon une autre caractéristique avantageuse, la ligne 1 comprend, en outre, une station d'accueil 16 pour recevoir temporairement, au cours de leur trajet entre les postes 3, des chariots 5, chargés ou non de produits 2, de sorte à assurer ainsi une zone d'accumulation en cas d'impossibilité pour le poste 3 de destination de recevoir les produits 2, ou d'impossibilité pour le poste 3 d'origine de fournir des produits 2.

Ladite station d'accueil 16 comprend notamment aussi des moyens de fourniture d'énergie aux chariots 5 qui s'y trouvent, pour leur permettre une recharge au cours de leur présence à la station d'accueil 16.

Selon une autre caractéristique additionnelle possible, chaque poste 3 est muni d'un moyen de transfert, pour récolter les produits 2 à traiter présents sur les chariots 5 et/ou pour déposer sur les chariots 5 les produits 2 traités, notamment un moyen de transfert comprenant un manipulateur 11. Ce moyen de transfert assure ainsi le déplacement des produits 2 entre la surface d'accueil 8 et soit la zone d'entrée 14 soit la zone de sortie 15. De façon générale, ce moyen de transfert peut être monté sur les chariots 5. Ainsi, dans des modes de réalisation particuliers, le au moins un chariot 5 est muni d'un moyen de transfert, pour récolter les produits 2 traités par un poste 3 amont et à déplacer vers un poste 3 aval, et/ou déposer à l'entrée d'un poste 3 aval, les produits 2 traités précédemment par un poste 3 amont et qu'il a déplacés.

Ledit moyen de transfert, monté sur un poste 3 ou un chariot 5, repose par exemple sur une solution robotique multiaxe ou à glissières, éventuellement avec un convoyage complémentaire du type à bande sans fin.

Selon une autre caractéristique additionnelle possible, les postes 3 traitent les produits 2 à l'unité et sont chacun munis d'un moyen d'alimentation à l'unité du type convoyage à bande sans fin, ainsi que d'un moyen d'extraction à l'unité du type convoyage à bande sans fin, les chariots 5 assurant le déplacement entre les postes 3 à chaque fois d'un lot de produits 2 similaires. Ces convoyages se situent respectivement en zone d'entrée 14 et zone de sortie 15. On comprend que toute configuration est envisageable : les chariots 5 peuvent, d'une part, recevoir des lots de produits 2 formant des tronçons d'une seule colonne ou de plusieurs colonnes, et, d'autre part, fournir des lots de produits 2 formant des tronçons d'une seule colonne ou de plusieurs colonnes. Le poste 3 peut être muni d'une solution de transformation du flux, pour convertir le flux unifilaire en flux plurifilaire ou inversement.

Il est peut ainsi être particulièrement avantageux de recevoir, dans la zone de sortie 15 d'un poste 3, les produits 2 en colonne unifilaire découpée successivement en lots à traiter et à accumuler transversalement sur le chariot 5, puis, pour le déchargement, dans la zone d'entrée 14 du poste 3 aval, de déplacer simultanément depuis le chariot 5 plusieurs tels lots. Grâce au principe de transfert sur le chariot 5, qui repose sur un transfert transversal de portions successives d'un flux unifilaire, les produits 2 sont donc stockés sur le chariot 5 en matrice non quinconcée et peuvent ensuite être fournis au poste 3 en aval avec une telle organisation.

L'invention a aussi pour objet un chariot 5 qui comprend, seules en combinaison, les caractéristiques décrites ci-dessus et nécessaires pour permettre la réalisation d'une telle ligne 1. Dans des réalisations possibles de ce chariot 5, il présente une surface d'accueil 8 des produits 2 sur laquelle ils peuvent reposer par leur partie basse, ladite surface d'accueil 8 ayant une forme essentiellement rectangulaire, les produits 2 traités étant alimentés d'un côté de ladite surface et ressortis du côté opposé et accumulés en rangées adjacentes entre ces côtés, de sorte à assurer que le premier produit entré soit le premier produit sorti.

L'invention a aussi pour objet un procédé de traitement de produits 2 au sein d'une ligne 1 de traitement de produits 2 comprenant une succession de postes 3 et assurant au moins une fonction de traitement de conditionnement en amont d'un magasin de gestion d'unités pleines de produits 2 à expédier, types palettes, ledit procédé comprenant des étapes consistant essentiellement à, d'une part, traiter les produits 2 au sein des postes 3 successifs, notamment les traiter à l'unité, et, d'autre part, déplacer, dans les locaux accueillant la ligne 1, les produits 2 jusqu'à un poste 3 en vue d'un traitement et/ou depuis un poste 3 après un traitement. Le traitement peut être un stockage, une organisation, ou encore une transformation, etc.

Selon l'invention, le déplacement des produits 2 entre les postes 3 se fait à l'aide d'au moins un chariot 5 mobile autonome autoporté qui transporte une pluralité de produits 2, le procédé comprenant une étape consistant à charger le chariot 5 mobile en sortie d'un poste 3 ainsi qu'une étape consistant à le décharger en entrée d'un poste 3.

Le déplacement des produits 2 au sein de la ligne 1 est donc réalisé par le chariot 5 sur lequel se trouvent les produits 2, en remplacement d'une solution de convoyage à structure fixe.

Les postes 3 assurent notamment un traitement des produits 2 à l'unité, les dits produits 2 sortant et/ou entrant dudit poste 3 préférablement en colonne, et l'opération de chargement du chariot 5 consistant alors notamment à déplacer sur le chariot 5 au moins un tronçon de ladite colonne en sortie, l'opération de déchargement consistant alors notamment à déplacer les produits 2 pour qu'ils forment successivement des tronçons de ladite colonne en entrée, voire des tronçons d'une alimentation en plusieurs colonnes, le chariot 5 pouvant accueillir une pluralité de tels tronçons placés les uns à côté des autres.

Dans le mode de réalisation particulier illustré aux figures annexées, la ligne 1 de traitement comprend une pluralité de postes 3 dans lesquels les produits 2 sont successivement traités. Les produits 2 sont préférablement des conteneurs pour liquide traités à l'unité, avant ou après remplissage, ou encore de groupes de tels conteneurs. Un tel traitement peut, par exemple, être un nettoyage de conteneur vide, un remplissage, un étiquetage, une mise en caisse, etc. Le premier poste 3 est par exemple un équipement du type dépalettisation, qui réceptionne des palettes pleines de produits à recycler, et qui débite des produits 2 à l'unité prêts à continuer dans le processus de remplissage et conditionnement en vue d'une expédition. En aval, le dernier poste 3 peut être un équipement de type palettisation, qui réceptionne des produits 2 conteneurs groupés en packs, caisses, fardeaux ou autres, et qui débite des palettes pleines de couches superposées comprenant chacune plusieurs tels packs. Un poste 3 peut aussi être un stock temporaire où les produits 2 sont accumulés sous l'une ou l'autre forme.

La ligne 1 objet de l'invention assure préférablement au moins l'une des fonctions suivantes :
- la production de contenants prêts à être remplis de liquide, en particulier une dépalletisation, un décaissage, nettoyage, tri, une fabrication, une orientation, une sélection, etc. ;
- la production de contenants indépendants prêts à l'usage, en particulier remplissage, étiquetage, bouchage, etc. ;
- la production d'éléments prêts à l'achat par l'utilisateur final, comme des packs, fardeaux, caisses, boîtes, etc., avec des fonctions de groupage, d'encaissage, de fardelage, ou autres ;
- la production d'un bloc prêt à l'expédition, via une centrale logistique, en particulier une unité ou palette faite de couches superposées, avec des fonctions de constitution et d'organisation des packs ou caisses en couches, ainsi que de superposition des couches les unes sur les autres puis d'enrobage par film élastique.

On comprend que dans chacune de ces fonctions, la ligne 1 traite les produits 2, que ce soit à l'unité ou en groupe. La ligne 1 n'est donc pas concernée par le traitement ultérieurs des blocs palettisés prêts à l'expédition mais contribue à la production préliminaire de tels blocs prêts à l'expédition, par traitement des produits 2 au sens large : conteneur unitaire ou groupe de conteneur en pack ou fardeau. La ligne 1 assure donc des fonctions de préparation préalable des ensembles palettisés à expédier physiquement dans d'autres locaux, par camion, bateau ou autre.

Pour les différents postes 3 de traitement dont les fonctions possibles ont été listées ci-dessus, les produits 2 sont donc généralement alimentés à l'entrée successivement, à l'unité ou en groupe, et sont ensuite récupérés à la sortie. Il est donc nécessaire d'amener les produits 2 entre les différents postes 3 de la ligne 1. L'invention propose alors, plutôt que d'utiliser des convoyeurs mécaniques encombrants et rigides, de récolter les produits 2 à la sortie d'un poste 3 sur un chariot 5 mobile, qui, lui, se déplacera jusqu'à l'entrée du poste 3 suivant et assurera ainsi, par son mouvement autonome, le déplacement des produits 2 au sein de la ligne 1.

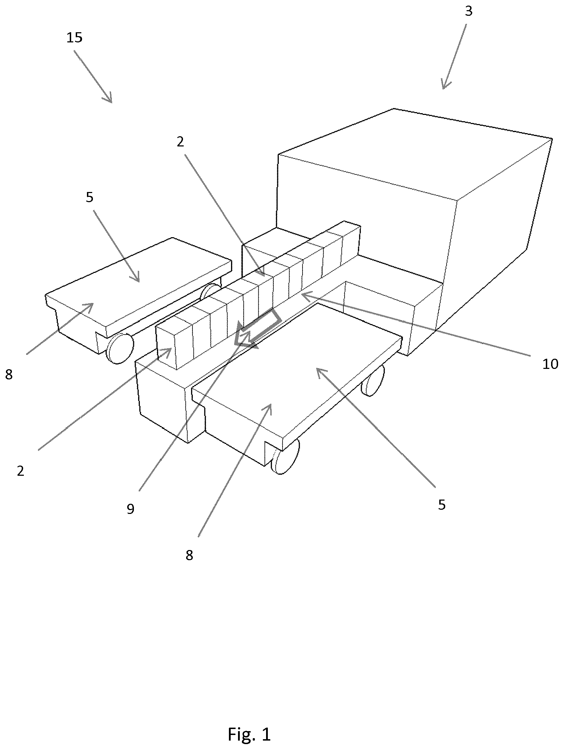

Dans l'exemple de la figure 1, les produits 2 sortent du poste 3 de traitement en colonne unifilaire dans la zone de sortie 15. Le poste 3 peut être une étiqueteuse, un sécheur, etc. Les produits 2 circulent à la sortie du poste 3 en une colonne orientée dans une direction de convoyage 9, et ce grâce par exemple à un convoyeur de sortie 10 qui débite les produits 2 sortant du poste 3, du type convoyeur à bande sans fin sur la surface supérieur duquel les produits 2 reposent.

Les produits 2 successifs sont ensuite déplacés vers un chariot 5 disposé à côté de la sortie du poste 3. Les produits 2 sont alors transférés grâce à un mouvement essentiellement perpendiculaire à la direction de convoyage 9. Le chariot 5 présente alors une surface d'accueil 8 supérieure sur laquelle les produits 2 sortants du poste 3 sont réceptionnés. On constatera que, de façon avantageuse, une pluralité de produits 2 successifs sont simultanément déplacés transversalement sur la surface d'accueil 8 du chariot 5. La surface d'accueil 8 du chariot 5 se trouve donc préférablement à la même hauteur que le convoyeur de sortie 10, et il suffit alors de pousser horizontalement le lot de produits 2 du convoyeur de sortie 10 jusqu'à la surface d'accueil 8. Cette opération de transfert horizontal transversal d'un lot peut se faire avec un manipulateur 11 qui saisit les produits 2, du type bouteilles, par leur partie supérieure, ou col, ou encore par un simple poussoir qui vient alors agir sur le corps des produits 2 en zone de sortie 15. L'avantage de travailler sur le corps voire le fond du produit 2 plutôt que sur sa partie supérieure est une plus grande versatilité quant aux différents formats possibles. Un agencement équivalent peut être prévu dans la zone d'entrée 14 du poste 3.

Selon la localisation respective de sa zone d'entrée 14 et de sa zone de sortie 15, un poste 3 peut alors, pour charger sur les chariots 5 les produits 2 qu'il débite à sa sortie, ou encore pour charger à son entrée les produits 2 qu'il doit traiter, être muni d'un manipulateur 2 capable d'assurer une voire les deux fonctions, voire de plusieurs manipulateurs 2, éventuellement un pour chaque fonction. On comprendra que, dans des réalisations possibles, le manipulateur 11 peut être embarqué sur le chariot 5 lui-même, comme au moins un poussoir, un bras commandé, ou encore un tapis mobile sur lequel reposent les produits 2.

Les produits 2 sont donc transférés sur le chariot 5 sous forme d'un lot ou ensemble compact avec les produits 2 les uns derrière les autres, conformément à la sortie du poste 3. Chaque lot sur le chariot 5 peut pousser transversalement le lot précédent, ou, alternativement, le chariot 5 peut être muni de son propre tapis qui assure le déplacement des lots successifs, transversalement à la direction de convoyage 9.

La colonne unifilaire de produits 2 en sortie de poste 3 est donc découpée en une succession de lots de produits 2 qui sont ensuite stockés côte à côte sur la surface d'accueil 8 du chariot 5, transversalement à la direction de convoyage 9.

Ce principe est bien sûr tout à fait adaptable à une sortie sous forme de plusieurs colonnes de produits 2 parallèles, ou sortie plurifilaire. Les produits 2 peuvent ainsi être transférés sur le chariot 5 par lots formés, chacun, de plusieurs rangées de produits 2 côte à côte qui s'étendent chacune dans la direction de convoyage 9.

Les produits 2 se placent donc, sur le chariot 5, au niveau de sa surface supérieure formant surface d'accueil 8, en matrice et non en quinconce : les produits 2 de deux rangées côte à côte se trouvent au même niveau plutôt qu'imbriqués, chacun, entre deux produits 2 de la rangée suivante. Lors du déchargement du chariot 5 au poste 3 suivant, il est ainsi possible de décharger à nouveau chaque segment successif voire de décharger simultanément plusieurs segments. On notera que ce mode de convoyage entre deux postes 3 permet d'éviter les problèmes associés au passage d'un flux organisé en quinconce à un flux organisé en matrice ou en couloirs parallèles, voire en un seul couloir, et inversement.

Le chariot 5 forme donc aussi un moyen d'accumulation sur lequel des produits 2 sortants du poste 3 sont stockés temporairement. La capacité d'accumulation du chariot 5 qui forme un accumulateur mobile autonome dépend bien entendu en particulier du temps nécessaire pour relier le poste 3 en aval, des vitesses de traitement respectives, de la vitesse de circulation du chariot 5, etc.

Le déroulement du traitement des produits 2 par la ligne 1, comprend donc une phase d'accostage par un chariot 5 vide de la sortie du poste 3, ainsi qu'une phase ultérieure de dégagement par le chariot 5 au moins partiellement rempli. Les étapes équivalentes d'accostage de la zone d'entrée 14 d'un poste 3 par un chariot 5 au moins partiellement plein ainsi que le dégagement du chariot 5 vide se déroulent, quant à elles, au niveau du poste 3 aval, là où les produits 2 ont été amenés.

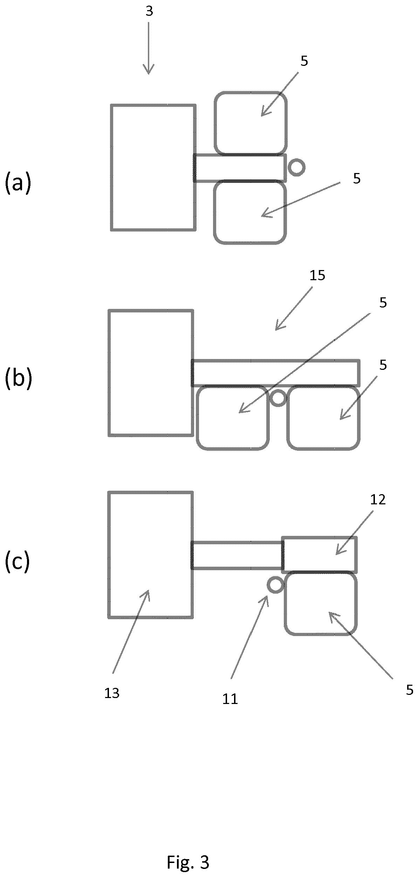

Ces durées d'accostage et de dégagement ne doivent préférablement pas gêner le fonctionnement en continu du poste 3 en amont et/ou du poste 3 en aval. Un poste 3 devant fournir des produits 2 à une portion de ligne 1 en aval présente alors une zone d'accostage pour chariot 5 à sa zone de sortie 15. Un poste 3 devant recevoir des produits 2 depuis l'amont de la ligne 1 présente une zone d'accostage pour chariot 5 à son entrée. Un poste 3 peut bien sûr cumuler les deux. La figure 3 montre ainsi des architectures possibles plus particulièrement pour la zone de sortie 15, mais qui sont tout à fait adaptables pour la zone d'entrée 14.

A la figure 3a, la zone de sortie 15 du poste 3 présente un convoyeur de sortie 10, avec une zone d'accostage pour chariot 5 de chaque côté. Le manipulateur 11 transférant les produits 2 du convoyeur de sortie 10 jusqu'aux chariots 5 est alors positionné de sorte à pouvoir assurer le transfert des produits 2 des deux côtés, par exemple dans le prolongement du convoyeur de sortie 10. Ainsi, l'accostage d'un chariot 5 peut se dérouler alors que l'autre chariot 5 est en cours de remplissage. Lorsque ce dernier chariot 5 est complet, il suffit ensuite de changer le fonctionnement du manipulateur 11 de sorte qu'il amène les produits 2 sur l'autre chariot 5. Le dégagement du chariot 5 précédemment rempli se fait alors pendant le chargement du nouveau chariot 5, et ainsi de suite. Le poste 3 peut alors travailler en continu, et les produits 2 qu'il débite peuvent être convoyés vers le poste 3 en aval de façon discontinue à l'aide des chariots 5 successivement accostés, remplis puis dégagés. La réalisation illustrée en figure 1 montre une telle possibilité d'avoir une distribution des produits 2 d'un côté puis de l'autre du convoyeur de sortie 10.

A la figure 3b, une alternative est illustrée, selon laquelle le convoyeur de sortie 10 présente des zones d'accostages l'une à la suite de l'autre, du même côté du convoyeur de sortie 10. Le manipulateur 11 transfert alors les produits 2 successivement soit vers un chariot 5 soit vers l'autre, et l'accostage et dégagement de l'un se fait pendant le remplissage de l'autre.

A la figure 3c, une autre solution est proposée, sur la base d'un tampon 12 à la sortie du poste de traitement 3. Ce tampon 12 permet en particulier d'accumuler les produits 2 pendant le temps nécessaire à l'accostage et/ou le dégagement d'un chariot 5. Compte tenu de la nécessité, dans des applications hautes cadences, d'arrêter le mouvement des produits 2 dans la direction de convoyage 9, ce tampon 12 peut aussi servir à arrêter les produits 2 sur une voie pendant qu'une autre voie est utilisée pour suivre la cadence continue du poste 3, etc. Ce tampon 12 peut alors prendre la forme d'une accumulation transversale de lots de produits 2 qui sera ensuite déplacée transversalement sur le chariot 5. On notera que ce tampon 12 peut former l'intégralité des produits 2 amenés simultanément sur la surface d'accueil 8 dans un seul cycle du manipulateur 11. En outre, le déchargement des produits 2 à l'entrée du poste 3 en aval peut aussi consister à déplacer simultanément tous les produits 2 présents sur la surface d'accueil 8 du chariot 5.

Le chariot 5 peut ainsi servir, par exemple, à recevoir du poste en amont 3 simultanément plusieurs colonnes parallèles de produits 2 non imbriqués, puis à les délivrer à nouveau simultanément au poste 3 en aval.

Le poste 3, dans les cas particuliers où il s'agit d'un poste transformant les produits 2 et non un simple stockage, comprend une zone de traitement 13, entre une zone d'entrée 14 et une zone de sortie 15 où se trouvent les portions pour l'accostage de chariot 5. Le poste 3 est préférablement muni, dans au moins l'une de ces zones, d'une solution de convoyage amenant les produits 2 depuis la zone d'entrée 14 vers la zone de traitement 13 et/ou depuis la zone de traitement 13 jusqu'à la zone de sortie 15. Les produits circulent donc sur une solution de convoyage, préférablement du type à tapis sans fin, entre la zone de traitement 13 et les chariots 5, en amont et/ou en aval. Le même tapis peut par exemple assurer le déplacement à travers les trois zones.

En outre, pour des applications à basse cadence, il est aussi envisageable que le manipulateur 11 assure un suivi du mouvement des produits 2 qui circulent sur le convoyeur de sortie 10. Le manipulateur 11 peut par exemple prendre la forme d'un robot muni d'un outil à son extrémité, ce dernier pouvant se déplacer à la vitesse de circulation des produits 2 ou au moins du convoyeur d'entrée ou sortie qui en assure le mouvement, de sorte qu'il n'est pas nécessaire d'arrêter la circulation longitudinale des produits 2. L'outil se déplace alors à la même vitesse que les produits 2 et peut les saisir par lot sans qu'il soit nécessaire, par exemple, d'arrêter le convoyeur de sortie 10. Ce suivi de la vitesse de circulation peut s'appliquer à la zone d'entrée 14 de sortie après la zone de traitement 13, mais aussi avant la zone de traitement 13, pour l'alimentation des produits 2.

Bien entendu, ces configurations sont combinables.

De façon avantageuse, les produits 2 sont transférés par lot, avec un mouvement essentiellement horizontal et perpendiculaire à la direction dans laquelle s'étend la au moins une colonne qui forme ledit lot, c'est-à-dire la direction de convoyage 9. Ce mouvement de chargement et déchargement est alors parallèle au plan de convoyage. Les lots sont ensuite successivement accumulés transversalement à ladite direction de convoyage 9. Le déchargement se fait préférablement du côté opposé à celui où se fait le chargement des produits 2 sur la surface d'accueil 8 du chariot 5, ce qui permet d'assurer notamment que les premiers produits 2 qui entrent sur le chariot 5 sont aussi les premiers qui en sortent : premier entré, premier sorti.

Dans une configuration préférée, la surface d'accueil 8 du chariot 5 est donc de forme essentiellement rectangulaire, et les produits 2 sont alimentés sur le chariot 5 le long du côté de ladite surface venant contre le convoyeur de sortie 10 et donc parallèle à lui et à la direction de convoyage 9. Les produits 2 sont ensuite déchargés préférablement par un côté lui aussi parallèle, notamment le côté opposé. Les produits 2 sortis du chariot 5 pour alimenter le poste 3 en aval sont ainsi agencés en lot s'étendant dans la direction de déplacement de produits 2 en entrée dudit poste. Le côté du chariot 5 où les produits 2 sont alimentés est donc parallèle à la direction de convoyage 9 des produits 2 sortant du poste 3 amont, alors que le côté du chariot 5 où les produits 2 sont déchargés pour alimenter le poste 3 en aval est parallèle au convoyage entrée dudit poste. Dans d'autres réalisations, le chargement et le déchargement peuvent se faire le long de côtés du chariot 5 qui ne sont pas parallèles entre eux mais par exemple perpendiculaires entre eux.

Comme il a déjà été dit, le chargement et/ou le déchargement du chariot 5 peut se faire à chaque fois avec un lot de produits 3 qui s'étend en une voire plusieurs colonnes de produits 2, parallèle ou parallèles à la direction de convoyage en amont et en aval.

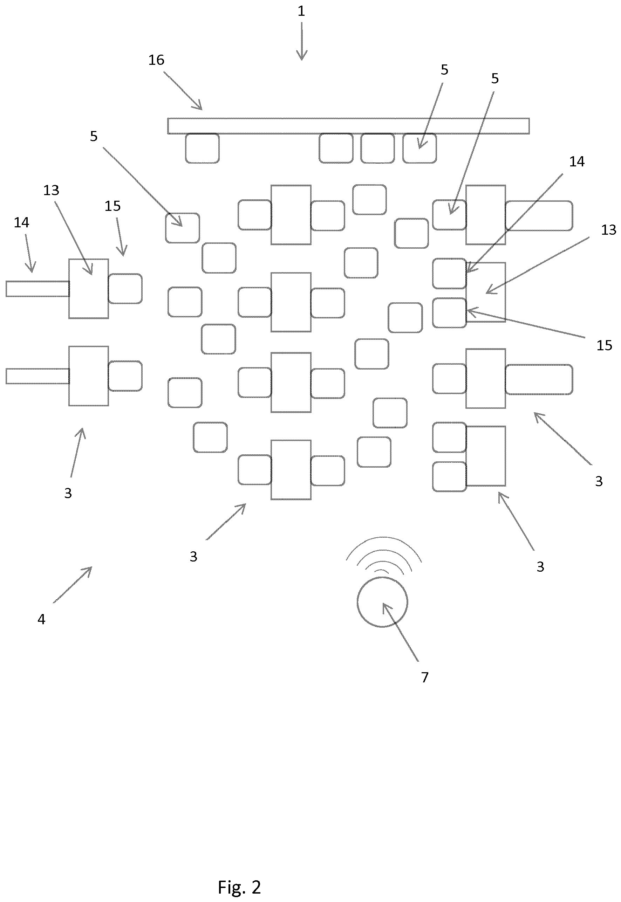

La figure 2 montre une application dans laquelle certains des postes 3 peuvent avoir leur sortie dans le prolongement de leur entrée, et certains autres avoir leur sortie et leur entrée côte à côte.

L'invention propose ainsi d'avoir une solution de convoyage entre les postes 3 qui soit d'itinéraire libre et non d'itinéraire fixe. Des solutions de convoyage par itinéraire fixe sont par exemple un convoyage mécanique à bandes sans fin sur support fixe, des navettes circulant sur des rails fixes et pouvant contenir un ou plusieurs produits 2, des blocs mobiles entre les postes 3 et guidés de façon inchangeable par des rails au sol, par exemple. Les chariots 5 mis en oeuvre dans l'invention, outre le fait de transporter les produits 2 en coopérant avec leur partie inférieure, ont un itinéraire libre, qui peut être ajusté par exemple en fonction des obstacles dans l'atelier où se trouve la ligne 1, éventuellement mobiles. Leur itinéraire peut aussi être changé en modifiant la définition des postes 3 entre lesquels ils doivent déplacer les produits 2, ce qui peut se faire par exemple dès lors qu'un poste 3 est en surcharge ou sous charge, voire dès lors qu'un autre poste 3 nécessite ponctuellement davantage de débit de chargement ou déchargement. Le fait d'avoir un itinéraire libre assure donc une très grande flexibilité même lorsque la ligne 1 est en fonctionnement pour ne traiter qu'un seul et même format de produits 2. On comprendra bien sûr que cela permet aussi une très grande flexibilité d'un format de produit 2 à l'autre puisqu'il est très facile d'utiliser une même flotte de chariot 5 pour des productions nécessitant des groupes de postes 3 différents à chaque fois, éventuellement localisés à d'autres endroits pour au moins certains d'entre eux. En outre, en cas de problème technique ou de besoin de maintenance sur un poste 3, il est très facile de dévier ailleurs les produits 3 qui lui étaient destinés ou encore de faire venir d'ailleurs les produits 2 qu'il devait fournir. Un besoin de surproduction ponctuelle est aussi très simple à couvrir, puisqu'il suffit de rajouter un ou plusieurs postes 3 dans le parc de postes 3 entre lesquels circulent les chariots 5.

La donnée du poste 3 où retirer les produits 2 ainsi que la donnée du poste 3 où délivrer ensuite les produits 2 peut suffire pour que le chariot 5, muni de sa propre unité de contrôle intelligente, définisse alors son trajet au sol dans l'atelier où se trouve la ligne 1. Préférablement, la ligne 1 est munie d'une centrale de contrôle 7 qui communique, notamment sans fil, avec chacun des chariots 5, pour envoyer des instructions de départ, destination, et/ou trajet, etc., pour, de façon générale, coordonner le comportement de la flotte de chariots 5.

Avantageusement aussi, comme le montre la figure 2, la ligne 1 peut être munie d'une station d'accueil 16 pour chariot 5. Cette station d'accueil peut préférablement recevoir au moins un chariot 5, plein, vide ou partiellement plein, dans le but d'assurer une fonction d'accumulation entre les postes 3 pour accumuler des produits 2 avant déchargement ou accumuler de la surface de convoyage avant chargement, etc. Cette station peut aussi servir à une recharge énergétique, dans le cas préféré où le chariot 5 embarque une réserve d'énergie type batterie électrique. Si un poste 3, en amont, délivre une quantité excessive de produits 2 par rapport à la capacité momentanée des postes 3 en aval, les chariots 5 pleins peuvent alors venir en attente dans la station d'accueil 16, qui forme ainsi un moyen d'accumulation entre postes 3 qui est adapté au convoyage par chariot 5. De la même manière, si un poste 3, en aval, consomme une quantité excessive de produits 2 par rapport à la capacité de production momentanée du poste 3 en amont, les chariots 5 vides peuvent venir en attente dans la station d'accueil 16.

Lors du fonctionnement de la ligne 1, chaque chariot 1 est préférablement affecté, d'une part, à un ilot amont comprenant au moins un poste 3, et, d'autre part, un ilot aval comprenant au moins un poste 3. Chaque chariot 5 prend alors préférablement les produits 2 à un poste 3 en amont, les dépose à un poste 3 en aval, et retourne au poste en amont pour le cycle suivant. On notera toutefois que le fait de réceptionner les produits 2 par leur partie inférieure de base reposant contre la surface d'accueil 8 du chariot 5 assure aussi la versatilité du chariot 5, qui est alors capable de convoyer tout type de produits 2 : conteneur type bouteille, de forme quelconque, pack, caisse, etc. Un chariot 5 peut donc servir momentanément à un lien bidirectionnel entre une autre paire de postes 3. De plus, un chariot 5 peut quitter un poste 3 alors qu'il n'est que partiellement chargé, puis rejoindre la sortie d'au moins un autre poste 3 pour y recevoir d'autres types de produits 2 et livrer par exemple ensuite simultanément un poste 3 en aval avec plusieurs types de produits 2 différents, voire livrer successivement plusieurs postes 3 avec les produits 2 qui lui sont destinés. Un chariot 5 peut aussi servir à la circulation entre plusieurs postes 3 et non simplement des aller-retour entre deux postes 3.

Pour assurer l'autonomie de mouvement des chariots 5, outre la centrale de contrôle 7 de coordination et/ou l'unité de pilotage qu'il embarque, le chariot 5 comprend une motorisation ainsi que la source d'énergie correspondante, le cas échéant. Le chariot 5 comporte préférablement un châssis pour recevoir l'ensemble de ces éléments, ainsi que la surface d'accueil 8. La mobilité peut être assurée par un moteur rotatif et roue, ou encore par moteur linéaire magnétique coopérant avec un revêtement adapté, ou toute autre forme d'actionneur. Préférablement, le chariot 5 embarque un moteur électrique, des roues qu'il entraîne, ainsi qu'une batterie électrique rechargeable. Cette batterie électrique peut alors être rechargée lorsque le chariot 5 est accosté à un poste 3, pour un chargement ou un déchargement, ou encore lorsque le chariot 5 se trouve dans la station d'accueil 16. Ce rechargement peut se faire par des connecteurs appropriés entre le chariot 5 et la station d'accueil 16 et/ou le poste 3, ou sans contact par borne magnétique coulée dans le sol.

On comprendra que ce principe de convoyage par chariot 5 autonome et autoporté peut s'appliquer au sein d'une ligne 1 qui ne comprend que des postes 3 qui assurent, chacun, une transformation des produits 2 mais aussi qui comprend des postes 3 où des produits 2 sont simplement stockés, éventuellement temporairement, après un déchargement des chariots 5 qui l'alimentent, ou encore avant un chargement des chariots 5 qu'il alimente. Les produits 2 peuvent alors être stockés dans un tel poste 3 en tant que produit 2 semi fini, par exemple, en attente d'un autre traitement, sans nécessiter de bloquer de chariot 5 comme dans une station d'accueil 16.

Les produits 2 traités sont des contenants, type bouteilles ou flacons, vides ou pleins, voire des groupes de tels contenants, type caisses, boîtes, ou encore fardeaux, comprenant plusieurs produits 2 du type contenant.

L'invention est applicable dans le cas de lignes où les postes 3 sont munis chacun d'au moins un convoyeur de sortie 10 pour délivrer en continu des produits 2 traités, et de façon avantageuse d'au moins un convoyeur d'entrée pour recevoir en continu des produits 2 à traiter. Une telle ligne traite normalement des produits 2 dans un flux ininterrompu. Les chariots 5 récupèrent alors des produits 2 d'un convoyeur de sortie 10 qui les débite en continu. Ils peuvent aussi fournir des produits 3 à un convoyeur d'entrée qui alimente alors le poste 3 en continu. Les postes 10 fonctionnent donc en continu et traitent des produits 2 de façon continue. Le cycle de traitement par les postes 3 et le cycle de déplacement par les chariots 5 sont sans interaction.

Dans une telle ligne, à la différence de ligne où les produits ne sont pas convoyés et/ou traités en continu, la fluidité et la continuité du traitement sont primordiales et alors garanties par le fait que le moyen de déplacement 4 peut recevoir des produits 2 sans interrompre le convoyeur de sortie qui l'alimente et délivre en continu, et peut délivrer des produits 2 sur un convoyeur d'entrée sans devoir l'arrêter. Pour être compatible avec un tel flux continu des postes 10, les chariots 5 véhiculent préférablement des produits 2 arrangés sur eux en une configuration sous forme d'une seule couche rectangulaire qui comprend plusieurs produits 2, ladite couche étant chargée puis déchargée par tronçons longitudinaux qui forment ensemble un flux continu. Le chariot 5 véhicule donc une pluralité de produits 2 organisée en en une seule couche dans laquelle les produits 2 sont en matrice, les uns à côté des autres. Les produits 2 peuvent reposer directement ou non sur le chariot 3.

Ainsi, préférablement, dans l'invention, la ligne concernée comprend, d'une part, une pluralité de postes 3 de traitement successif desdits produits 2, et, d'autre part, un moyen de déplacement 4, pour déplacer les produits 2 entre les postes 3 au sein de cette ligne 1, à savoir depuis des postes 3 amont présentant chacun un convoyeur de sortie 10 sur lequel les produits 2 traités sont délivrés en continu sous forme d'une colonne d'un ou plusieurs produits 2 de large pour un chargement du moyen de déplacement 4, vers des postes 3 aval présentant chacun un convoyeur d'entrée pour un déchargement du moyen de déplacement 4, sur lequel les produits 2 sont reçus en colonne d'un ou plusieurs produits 2 de large.

Le convoyeur de sortie 10 délivre donc des produits 2 en flux continu.

Globalement, grâce à l'invention, il est ainsi possible d'obtenir, en amont d'une centrale logistique d'expédition d'ensembles finis, une ligne 1 de traitement de produits 2 extrêmement versatile et flexible, où la modification des postes 3 de traitement se fait très facilement, sans nécessiter ni reconception ni réaménagement de convoyeurs fixes et infrastructure correspondante : alimentation électrique des moteurs associés, passerelles de circulation, etc.

## Revendications

1. Ligne (1) de traitement de produits (2) à la chaîne, comprenant, d'une part, une pluralité de postes (3) de traitement successif desdits produits (2), et, d'autre part, un moyen de déplacement (4), pour déplacer les produits (2) entre les postes (3) au sein de cette ligne (1) depuis un poste (3) amont vers un poste (3) aval, lesdits produits (2) étant de type conteneur de liquide ou d'aliment à l'unité ou en groupe, ledit poste (3) amont présentant en sortie un convoyeur de sortie (10) qui débite en continu les produits (2) en une ou plusieurs colonnes, ligne **caractérisée en ce que** le moyen de déplacement (4) consiste essentiellement en au moins un chariot (5) mobile autoporté autonome évoluant au sol et qui transporte les produits (2) au cours de leur déplacement au sein de la ligne (1).

2. Ligne (1) de traitement selon la revendication 1, où
le au moins un chariot (5) mobile est muni d'un entraînement embarqué, de sorte que ledit chariot (5) peut générer lui-même son propre mouvement.

3. Ligne (1) de traitement selon l'une quelconque des revendications 1 ou 2, où
le au moins un chariot (5) est apte à définir lui-même son itinéraire entre son poste (3) de départ et son poste (3) d'arrivée, en tenant compte, en particulier, du temps imparti pour le trajet, des obstacles à éviter, etc.

4. Ligne (1) de traitement selon l'une quelconque des revendications 1 à 3, **caractérisée en ce que**
elle comprend, en outre, une station d'accueil (16) pour recevoir temporairement, au cours de leur trajet entre les postes (3), des chariots (5), chargés ou non de produits (2).

5. Ligne (1) selon l'une quelconque des revendications 1 à 4, où
chaque poste (3) est muni d'un moyen de transfert, pour récolter les produits (2) à traiter présents sur les chariots (5) et/ou pour déposer sur les chariots (5) les produits (2) traités.

6. Ligne (1) selon l'une quelconque des revendications 1 à 4, où
le au moins un chariot (5) est muni d'un moyen de transfert, pour récolter les produits (2) traités par un poste (3) amont et à déplacer vers un poste (3) aval, et/ou déposer à l'entrée d'un poste (3) aval, les produits (2) traités précédemment par un poste (3) amont et qu'il a déplacés.

7. Ligne (1) selon l'une quelconque des revendications 1 à 6, où
les postes (3) traitent les produits (2) à l'unité et sont chacun munis d'un moyen d'alimentation à l'unité du type convoyage à bande sans fin, ainsi que d'un moyen d'extraction à l'unité du type convoyage à bande sans fin, les chariots (5) assurant le déplacement entre les postes (3) à chaque fois d'un lot de produits (2) similaires.

8. Utilisation de chariots (5) mobiles autoportés autonomes en tant que moyen de déplacement (4) dans une ligne (1) de traitement de produits (2) à la chaîne telle que revendiquée selon l'une quelconque des revendications précédentes, comprenant, d'une part, une pluralité de postes (3) de traitement successif desdits produits (2), et, d'autre part, un moyen de déplacement (4), pour déplacer les produits (2) entre les postes (3) au sein de cette ligne (1), ladite ligne (1) assurant une fonction de traitement pour conditionnement des produits (2) en amont d'un magasin de répartition de palettes chargées de produits (2) conditionnés à expédier, lesdits chariots (5) prenant les produits (2) à un poste (3) en amont, à la sortie duquel ils circulent en continu en une ou plusieurs colonnes grâce à un convoyeur de sortie (10), et les déposant à un poste (3) en aval.

9. Procédé de traitement de produits (2) au sein d'une ligne (1) de traitement de produits (2) telle que revendiquée selon l'une quelconque des revendications 1 à 7 comprenant une succession de postes (3) et assurant au moins une fonction de traitement de conditionnement en amont d'un magasin de gestion d'unités pleines de produits (2) à expédier, types palettes, ledit procédé comprenant des étapes consistant essentiellement à, d'une part, traiter les produits (2) au sein des postes (3) successifs, notamment les traiter à l'unité, et, d'autre part, déplacer, dans les locaux accueillant la ligne (1), les produits (2) jusqu'à un poste (3) en vue d'un traitement et/ou depuis un poste (3) après un traitement,
Procédé **caractérisé en ce que**
le déplacement des produits (2) entre les postes (3) se fait à l'aide d'au moins un chariot (5) mobile autonome autoporté qui transporte une pluralité de produits (2), le procédé comprenant une étape consistant à charger le chariot (5) mobile en sortie d'un poste (3) ainsi qu'une étape consistant à le décharger en entrée d'un poste (3),
le au moins un chariot (5) prenant les produits (2) à un poste (3) en amont, à la sortie duquel ils circulent en continu en une ou plusieurs colonnes grâce à un convoyeur de sortie (10), et les déposant à un poste (3) en aval.

## Patentansprüche

1. Linie (1) zur Verarbeitung von Produkten (2) am Fließband, welche einerseits mehrere Stationen (3) zur aufeinander folgenden Verarbeitung der Produkte (2) und andererseits ein Bewegungsmittel (4) zum Bewegen der Produkte (2) zwischen den Stationen (3) innerhalb dieser Linie (1) von einer vorgelagerten Station (3) zu einer nachgelagerten Station (3) umfasst, wobei die Produkte (2) vom Typ von einzeln oder in Gruppen angeordneten Flüssigkeits- oder Lebensmittelbehältern sind,
wobei die vorgelagerte Station (3) am Ausgang einen Ausgangsförderer (10) aufweist, welcher die Produkte (2) kontinuierlich in einer oder mehreren Reihen fördert,
wobei die Linie **dadurch gekennzeichnet ist, dass** das Bewegungsmittel (4) im Wesentlichen aus wenigstens einem autonomen selbsttragenden beweglichen Wagen (5) besteht, der sich auf dem Boden bewegt und der die Produkte (2) während ihrer Bewegung innerhalb der Linie (1) transportiert.

2. Linie (1) zur Verarbeitung nach Anspruch 1, wobei der wenigstens eine bewegliche Wagen (5) mit einem integrierten Antrieb ausgestattet ist, so dass der Wagen (5) seine eigene Bewegung selbst erzeugen kann.

3. Linie (1) zur Verarbeitung nach einem der Ansprüche 1 oder 2, wobei
der wenigstens eine Wagen (5) in der Lage ist, selbst seine Fahrtroute zwischen seiner Abfahrtsstation (3) und seiner Ankunftsstation (3) zu bestimmen, unter Berücksichtigung insbesondere der für den Weg vorgesehenen Zeit, der zu umfahrenden Hindernisse usw.

4. Linie (1) zur Verarbeitung nach einem der Ansprüche 1 bis 3, **dadurch gekennzeichnet, dass** sie außerdem eine Andockstation (16) zum zeitweiligen Aufnehmen von mit Produkten (2) beladenen oder nicht beladenen Wagen (5) während ihres Weges zwischen den Stationen (3) umfasst.

5. Linie (1) nach einem der Ansprüche 1 bis 4, wobei jede Station (3) mit einem Übergabemittel ausgestattet ist, um die zu verarbeitenden Produkte (2), die auf den Wagen (5) vorhanden sind, zu entnehmen und/oder um die verarbeiteten Produkte (2) auf den Wagen (5) abzusetzen.

6. Linie (1) nach einem der Ansprüche 1 bis 4, wobei der wenigstens eine Wagen (5) mit einem Übergabemittel ausgestattet ist, um die Produkte (2), die von einer vorgelagerten Station (3) verarbeitet wurden, abzuholen und sie zu einer nachgelagerten Station (3) zu bewegen, und/oder um am Eingang einer nachgelagerten Station (3) die Produkte abzusetzen, die zuvor von einer vorgelagerten Station (3) verarbeitet wurden und die er bewegt hat.

7. Linie (1) nach einem der Ansprüche 1 bis 6, wobei die Stationen (3) die Produkte (2) einzeln verarbeiten und jeweils mit einem Mittel zur einzelnen Zuführung vom Typ eines endlosen Förderbandes sowie mit einem Mittel zur einzelnen Abführung vom Typ eines endlosen Förderbandes ausgestattet sind, wobei die Wagen (5) jedes Mal die Bewegung eines Loses von ähnlichen Produkten (2) zwischen den Stationen (3) sicherstellen.

8. Verwendung von autonomen selbsttragenden beweglichen Wagen (5) als Bewegungsmittel (4) in einer Linie (1) zur Verarbeitung von Produkten (2) am Fließband, wie in einem der vorhergehenden Ansprüche beansprucht, welche einerseits mehrere Stationen (3) zur aufeinander folgenden Verarbeitung der Produkte (2) und andererseits ein Bewegungsmittel (4) zum Bewegen der Produkte (2) zwischen den Stationen (3) innerhalb dieser Linie (1) umfasst, wobei die Linie (1) eine Verarbeitungsfunktion zur Verpackung der Produkte (2) sicherstellt, die einem Lager zur Verteilung von Paletten, die mit zu versendenden verpackten Produkten (2) beladen sind, vorgelagert ist, wobei die Wagen (5) die Produkte (2) an einer vorgelagerten Station (3) übernehmen, an deren Ausgang diese sich dank einem Ausgangsförderer (10) kontinuierlich in einer oder mehreren Reihen bewegen, und sie an einer nachgelagerten Station (3) absetzen.

9. Verfahren zur Verarbeitung von Produkten (2) innerhalb einer Linie (1) zur Verarbeitung von Produkten (2), wie in einem der Ansprüche 1 bis 7 beansprucht, welche eine Folge von Stationen (3) umfasst und wenigstens eine Verarbeitungsfunktion zur Verpackung sicherstellt, die einem Lager zur Verwaltung von Einheiten vom Typ von Paletten, die mit zu versendenden Produkten (2) gefüllt sind, vorgelagert ist, wobei das Verfahren Schritte umfasst, die im Wesentlichen darin bestehen, einerseits die Produkte (2) innerhalb der aufeinander folgenden Stationen (3) zu verarbeiten, insbesondere sie einzeln zu verarbeiten, und andererseits in den Räumen, welche die Linie (1) aufnehmen, die Produkte (2) bis zu einer Station (3) zwecks einer Verarbeitung und/oder von einer Station (3) weg nach einer Verarbeitung zu bewegen,
wobei das Verfahren **dadurch gekennzeichnet ist, dass** die Bewegung der Produkte (2) zwischen den Stationen (3) mithilfe wenigstens eines selbsttragenden autonomen beweglichen Wagens (5) erfolgt, welcher mehrere Produkte (2) transportiert, wobei das Verfahren einen Schritt, der darin besteht, den beweglichen Wagen (5) am Ausgang einer Station (3) zu beladen, sowie einen Schritt, der darin besteht, ihn am Eingang einer Station (3) zu entladen, umfasst,
wobei der wenigstens eine Wagen (5) die Produkte (2) an einer vorgelagerten Station (3) übernimmt, an deren Ausgang sie sich dank einem Ausgangsförderer (10) kontinuierlich in einer oder mehreren Reihen bewegen, und sie an einer nachgelagerten Station (3) absetzt.

## Claims

1. Line (1) for chain processing products (2), comprising, on the one hand, several stations (3) for successive processing said products (2), and, on the other hand, a movement mean (4), for moving the products (2) between the stations (3) within said line (1) from an upstream station (3) to a downstream station (3), said products (2) being of the liquid or food container type, said products (2) being single or grouped, said upstream station (3) comprising as output an output conveyor (10) that continuously puts out the products (2) into one or more columns,
line **characterized in that**
the movement mean (4) essentially consists of at least one self-contained, self-supported movable carriage (5) that moves on the ground and that transports the products (2) during their movement within the line (1).

2. Processing line (1) according to Claim 1, wherein
the at least one movable carriage (5) is equipped with an on-board drive, in such a way that said carriage (5) can itself generate its own movement.

3. Processing line (1) according to any one of Claims 1 or 2, wherein
the at least one carriage (5) is able to itself define its itinerary between its departure station (3) and its arrival station (3), by taking into account, in particular, the time assigned for the trip, obstacles to avoid, etc.

4. Processing line (1) according to any one of Claims 1 to 3, **characterized in that**
it comprises, in addition, a receiving station (16) for temporarily receiving, during their trip between the stations (3), carriages (5) being unloaded or loaded with products (2).

5. Processing line (1) according to any one of Claims 1 to 4, wherein
each station (3) is equipped with a transfer mean for collecting the products (2) to be processed that are present on the carriages (5) and/or for depositing the processed products (2) on the carriages (5).

6. Processing line (1) according to any one of Claims 1 to 4, wherein
the at least one carriage (5) is equipped with a transfer mean to collect the processed products (2) by an upstream station (3) and to move toward a downstream station (3), and/or to deposit at the input a downstream station (3) the products (2) previously processed and moved by an upstream station (3).

7. Processing line (1) according to any one of Claims 1 to 6, wherein
the stations (3) process the products (2) one at a time and are each equipped with a mean for product singly feeding of the endless-belt-conveying type, as well as a mean for singly extraction of the endless-belt-conveying type, the carriages (5) each time performing the movement of a batch of similar products (2) between the stations (3).

8. Use of self-contained, self-supported movable carriages (5) as a movement mean within a line (1) for processing products (2) according to any of the preceeding Claims, comprising. on the one hand, several stations (3) for successive processing said products (2), and, on the other hand, a movement mean (4), for moving the products (2) between the stations (3) within said line (1), wherein said line (1) performing a processing function for packaging products (2) upstream from a storage unit for distributing pallets loaded with packaged products (2) to be shipped, said carriages (5) taking the products (2) from an upstream station (3) at the output of which they continuously circulate into one or more columns through an output conveyor (10), and put them to a downstream station (3).

9. Method for processing products (2) within a line (1) for processing products (2) according any of the claim 1 to 7 comprising a succession of stations (3) and performing at least one processing function for packaging upstream from a storage unit for managing units full of products (2) to be shipped, of the pallet type, wherein said method comprising steps essentially consisting in, on the one hand, processing the products (2) within successive stations (3), in particular processing them one at a time, and, on the other hand, moving, in the facility receiving the line (1), the products (2) to a station (3) for processing and/or from a station (3) after processing,
method **characterized in that**
the movement of the products (2) between the stations (3) is done using at least one self-supported, self-contained movable carriage (5) transporting several products (2), wherein the method comprising a step consisting in loading the movable carriage (5) upon output from a station (3) as well as a step consisting in unloading it upon input of a station (3),
the at least one carriage (5) taking the product (2) from an upstream station (3) at the output of which they continuously circulate into one or more columns through an output conveyor (10), and put them to a downstream station (3).
